Europäisches Patentamt

European Patent Office

Office européen des brevets

(11) Publication number: 0 419 001 A1

# EUROPEAN PATENT APPLICATION

(21) Application number: 90306638.9

(22) Date of filing: 20.06.90

(51) Int. Cl.5: B29C 51/14

(30) Priority: 20.07.89 US 382378

(43) Date of publication of application:
27.03.91 Bulletin 91/13

(84) Designated Contracting States:
DE FR GB

(71) Applicant: GENERAL MOTORS CORPORATION
General Motors Building 3044 West Grand
Boulevard
Detroit Michigan 48202(US)

(72) Inventor: Short, William T.
18595 Framingham Street
Southfield, MI 48076(US)

Inventor: Mentzer, Charles C.
18843 Medford
Birmingham, MI 48009(US)
Inventor: Cox, Howard W.
2766 Heathfield
Birmingham, MI 48010(US)
Inventor: Eusebi, Elio
3771 Woodman
Troy, MI 48084(US)

(74) Representative: Haines, Arthur Donald et al
Patent Section Vauxhall Motors Limited 1st
Floor Gideon House 26 Chapel Street
Luton, Bedfordshire LU1 2SE(GB)

(54) Thermoformable laminate films and processes.

(57) A process of making a moulded part having a paint layer covering the surface thereof includes the steps of providing a laminate (10) including a film layer (12), a clear coat layer (14), and a paint layer (16) disposed therebetween having a predetermined gloss and hue. The laminate (10) is supported in a mould housing (18) having a material inlet with the film layer side (12) of the laminate (10) facing the inlet and the mould (18) having a predetermined internal surface shape (20). A substrate (22) is moulded against and adhered to the film layer side (12) of the laminate (10) for bonding to the laminate (10) and conforming to the predetermined shape (20) of the mould (18) whilst retaining the predetermined gloss and hue of the laminate (10). A formed part is removed from the mould (18) which substantially retains the predetermined gloss and hue on the laminate side thereof.

Fig.1.

Fig.3.

# THERMOFORMABLE LAMINATE FILMS AND PROCESSES

Field of the Invention

The present invention relates to a process of making a painted part by producing a laminated covering adhered to or otherwise bonded to a rigid substrate as specified in the preamble to claim 1, for example as disclosed in U.S. Patent 4,828,637.

Background of the Invention

It is known to process unfinished vehicle body parts into finished, ready-to-use parts by thermoforming a decorative laminate and adhering the laminate onto the unfinished surface of the body part. For example, U.S. Patent 4,028,163 discloses a process for stretching the length of a foil of synthetic plastics to assure that the foil material remains wrinkle-free as it is applied to an underlying door panel. The specific tensioning method assures that the foil remains under tension until it is wrapped around the edge of a door panel.

U.S. Patent 4,268,570 discloses a metal-coated plastics product with a polymeric carrier film. The metal coating is vacuum-deposited and covered with a protective top coat.

U.S. Patent 4,533,704 discloses a base coat/clear coat system which can be applied to either a metal or a plastics substrate to protect the substrate. The clear coat top layer is a urethane-modified polyester. The base coat is a urethane-modified polyester including a pigment.

The applicants have invented a method of applying a pre-painted carrier film to an automobile body part in a vacuum thermoforming process. This invention is the subject matter of U.S. Patents 4,838,973 and 4,828,637. The applications describe the loss of gloss and colour uniformity of a decorative laminate when exposed to substantial moulding strains, such as greater than 20%. A process for preventing degradation of appearance on thermoforming is claimed in U.S. Patents 4,838,973 and 4,828,637 in which decorative laminates were formed against and adhesively bonded to an existing, relatively rigid unfinished part.

It has been found that a laminate including a film layer, a paint layer, and a clear coat layer thereover can retain initial gloss after substantial stretching during the thermoforming process. The thickness of clear coat is critical to the retention of gloss and hue. There remains a great number of applications for the laminate process but questions have developed as to the ability of the laminate to retain gloss and hue under various processing conditions.

It is an object of the present invention to provide a method of making a painted part utilizing the clear coat-covered painted film laminate in an in-mould process, such as by injection-moulding or reaction-injection-moulding.

It is another object of the present invention to utilize the in-mould technique for bonding the substrate to the laminate.

It is another object of the present invention to utilize the moulding technique to stretch and form the film laminate into a predetermined shape.

Summary of the Invention

A process according to the present invention is characterised by the features specified in the characterising portion of claim 1.

In accordance with the present invention, there is provided a process of making a moulded part having a paint-covered surface including the steps of providing a laminate including a film layer, clear coat layer, and paint layer disposed therebetween having a predetermined gloss and hue and supporting the laminate in a mould housing having a material inlet with the film side of the laminate facing the inlet, and the mould housing having a predetermined internal surface shape. A substrate is moulded against and adhered to the film side whilst stretching the laminate to conform to the predetermined shape of the mould whilst retaining the predetermined gloss and hue of the laminate. A formed part is removed from the mould having substantially the predetermined gloss and hue of the laminate side thereof.

Brief Description of the Drawings

Other advantages of the present invention will be readily appreciated as the same becomes better understood by reference to the following detailed description when considered in connection with the accompanying drawings, in which:

Figure 1 is a perspective view, partially broken away, of a laminate of the present invention;

Figure 2 is a diagrammatic view of an in-mould apparatus for moulding a substrate to a formed laminate pursuant to the present invention;

Figure 3 is a diagrammatic view of the formed substrate laminate member within the mould, made in accordance with the present invention;

Figure 4 is a diagrammatic view of a thermoforming apparatus for moulding the laminate therein during an injection-moulding step pursuant to the present invention;

Figure 5 is a diagrammatic view of the substrate and laminate formed in the moulding apparatus in accordance with the present invention; and

Figure 6 is a chart showing the process of the present invention.

Detailed Description of the Preferred Embodiments

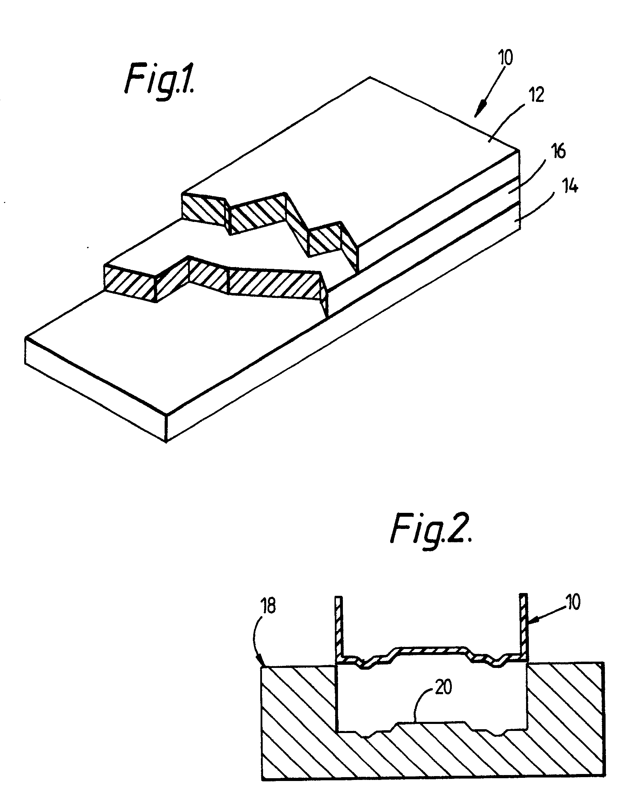

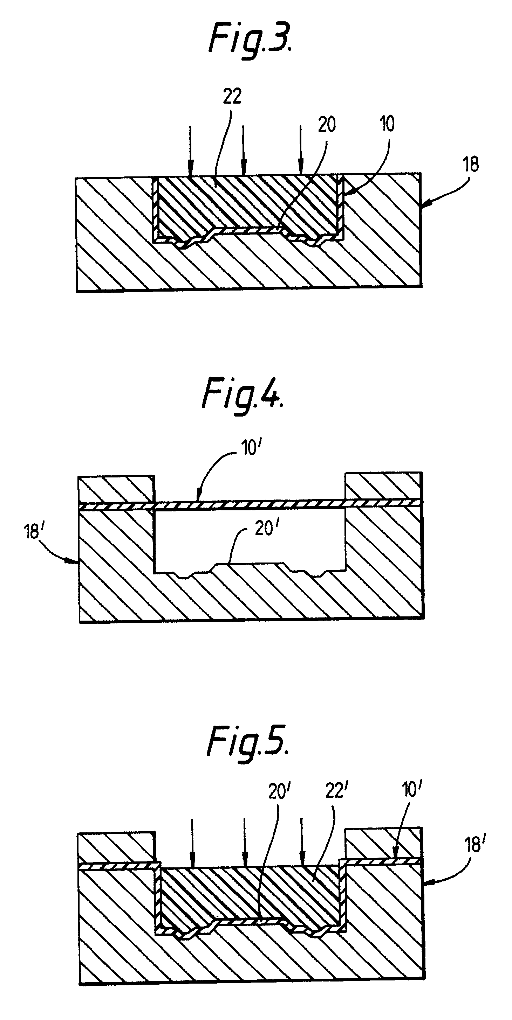

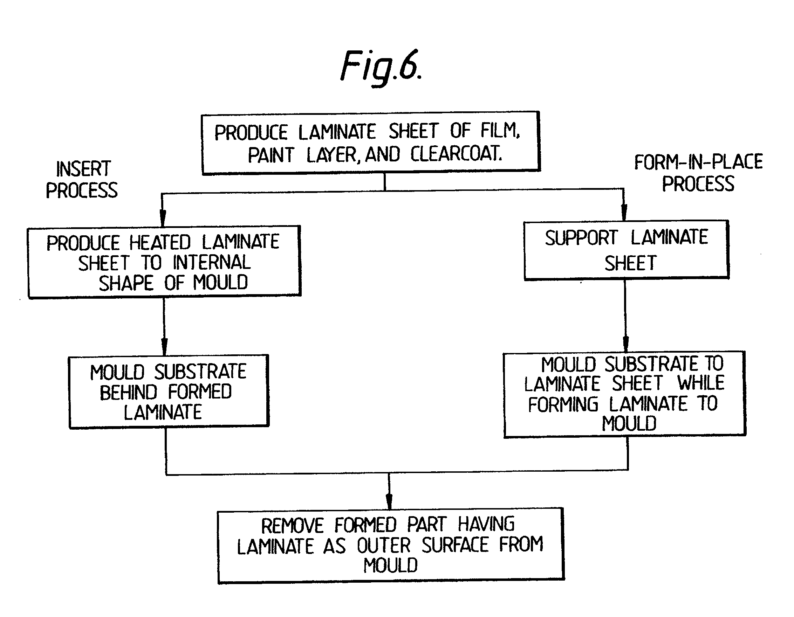

In accordance with the present invention, there is provided a process of making a moulded part having a paint-covered surface which is summarized in Figure 6. The process includes the steps of providing a laminate generally indicated at 10 in Figure 1, the laminate including a film layer 12, an outer clear coat layer 14, and a paint layer 16 disposed therebetween. The laminate has a predetermined gloss and hue emanating from the painted surface thereof. The laminate 10 is supported in a mould housing, as generally indicated at 18 in Figures 2 and 3. The mould housing 18 includes a material inlet (not shown in drawings), the laminate 10 being supported so that the film layer 12 of the laminate 10 faces the inlet and the clear coat layer 14 of the laminate faces the interior of the mould cavity. The mould housing 18 includes an inner surface 20 having a predetermined internal shape.

Generally, a substrate 22 is moulded against and adhered to the film side of the laminate 10 and conforms to the predetermined internal shape of the mould 18 whilst the laminate retains the predetermined gloss and hue. The formed part comprising the substrate 22 adhered to the laminate 10 is removed from the mould 18 whilst having substantially the predetermined gloss and hue on the laminate side thereof. Accordingly, the present invention provides a deformable laminate which can be applied by an in-mould application; that is, an application where the part is formed behind the laminate and bonded to it during the moulding of the substrate. During this moulding process, there is no significant loss of gloss and hue of the paint surface of the final part as compared to the original unmoulded or deformed laminate.

The laminate 10 includes the carrier film 12 which can be selected from a suitable class of thermoformable carrier film materials such as thermoplastic polyurethanes, polyesters, vinyl copolymers, polyvinyl chloride and blends, or copolymers thereof. Other thermoformable carrier film materials can be used. The carrier film can be a rigid film, such as a propianate or cellulosic film or an elastomeric film such as a polyester urethane or polyether urethane film.

The film 12 is coated with a paint, such as a base coat and/or a primer. Coatings such as air-dry acrylic urethane, elastomeric urethane top coats, enamel and lacquer primers, solvent-borne base coats and water-borne lacquer base coats can be used. Critical to the invention is the clear coat layer 14, which is applied over the coating surface at a sufficient thickness to control the gloss and hue when the laminate is deformed, and can comprise a clear coat such as acrylic urethane, two-component urethane clear coats and melamine-polyester clear coats. Of course, other coatings and clear coats may be used. The clear coat is a means for controlling the appearance and preventing the loss of gloss and hue after the laminate 10 has been strained.

The substrate 22 can be moulded by such processes as injection-moulding and reaction-injection-moulding. The substrate 22 can be selected from the group including, but not limited to, cast nylon, cast urethane, RIM urethane, and injection-moulded urethane and polyesters.

Figures 2 and 3 show a first process wherein the laminate is pre-formed, as by vacuum-moulding into a predetermined shape consistent with the shape of the inner surface 20 of the mould 18. As shown in Figure 3 the laminate 10 is loaded into a supported relationship with surface 20. The substrate 22 is then injected into the mould and adheres to the film surface of the laminate 10. The substrate 22 conforms to the shape of the mould and has an outer surface comprising the laminate. The outer surface of the laminate retains substantially the original predetermined gloss and hue.

An alternative process is shown in Figures 4 and 5. A substantially flat laminate 10′, with the same layers as laminate 10, is supported in a mould 18′ so that the clear coat surface 14 thereof faces the interior

3

surface 20' of the mould 18'. A curable or molten thermoplastic polymeric material 22' is injected into the mould 18', as shown in Figure 5, and against the film side 12 of the laminate 10' so that the injected material 22' stretches and forms the laminate 10' against the shape of the inner surface 20' of the mould 18'. The stretching is facilitated by the heat of the injected material. The mould 18' is also generally heated.

During either moulding process, the clear coat 14 produces a uniform colour appearance and prevents significant loss of gloss either when the laminate 10' is stretched more than 20% as shown in Figures 4 and 5 or when the pre-formed laminate 10' is subjected to the injection-moulding process shown in Figures 2 and 3.

To maintain the uniform colour appearance and prevent significant loss of gloss, the most critical factor is the thickness of the clear coat. The carrier film can be 0.0254 to 2.54 mm (1 to 100 mils) thick, preferably 0.0508 to 0.508 mm (2 to 20 mils) thick. The colour coat can be 0.0127 to 0.127 mm (0.5 to 5 mils) thick and preferably 0.0127 to 0.0381 mm (0.5 to 1.5 mils) thick. Critically, the clear coat can be 0.0127 to 0.054 mm (0.5 to 10 mils) thick and preferably 0.0254 to 0.127 mm (1 to 5 mils) thick.

The substrate 22,22' can adhere to the laminate 10,10' either due to chemical bonding directly between the substrate and laminate or due to the addition of an adhesion promoter. The adhesion promoter can be in the form of a co-solvent of the film and substrate or in the form of a separate adhesive compound.

The inventive process can further include the step of preventing entrapment of air between the clear coat side 14 of the laminate 10 and the mould 18 as the laminate 10 is stretched. To accomplish this step, a surface-active agent can be incorporated into the clear coat 14 prior to forming the laminate 10. Surface-active agents such as ionic and non-ionic surfactants can be used tc prevent wrinkling, dimples, and large scale surface bubbles as a result of air entrapment. The surface-active agent acts as a friction reducer at the moulding temperature without adversely affecting the appearance of the part. The higher the temperature of the mould surface, the more severe are the problems that can exist.

EXAMPLES:

Example 1

This example demonstrates that the moulding operation per se does not change the laminate appearance. To show this, the appearance of cast urethane panels finished in the mould with a laminate in accordance with the present invention were determined.

A variety of thin, thermo-formable plastics carrier films were painted with a commercial automotive elastomeric topcoat. These films were then carefully characterized for gloss and distinction of image (DOI), two parameters considered critical to appearance. Next, the topcoated films were backed without stretching by a cast urethane substrate, and measurements were taken to determine the effect of the moulding process on the plaque appearance. Primed and topcoated steel panels, painted at the same time as the carrier films, were used as controls.

Films used in the study included poly(ethylene terephthalate) (PET), a glycol-modified poly(ethylene terephthalate) (PETG), polycarbonate (PC), and polyurethane (UR) films. All films were nominally 0.254 mm (10 mils) in thickness (250 micrometres). The coating used in the experiments was a red maple elastomeric enamel topcoat (PPG Industries Durethane 101 (R.T.M.) ). The two-component polyurethane substrate system used in the experiment was chosen to simulate currently employed reaction-injection-moulded materials.

The appearance of the laminates and the plaques made from the laminates are shown in Table I. The values for the PET, PETG, and PC laminates are all comparable with those of the spray painted steel controls, and those of the UR are substantially the same. Also the moulded appearance was substantially the same as the pre-moulded appearance of the laminates.

Thus, the painted film process in accordance with the present invention for coating a part in the mould is feasible for a wide range of film types. Furthermore, the moulding process itself did not alter the gloss or hue of the unstretched laminates.

TABLE I

| Average 30° Gloss and DOI of Topcoated (Red Maple Durethane 101 enamel) Carrier Films and Urethane Plaques Finished with Carrier Films. | | | |
|---|---|---|---|
| | Carrier Film | Painted Film | Plaques |
| Gloss DOI | PET | 65 77.5 | 60.5 75.5 |
| Gloss DOI | PETG | 55.5 64.6 | 51.9 64.7 |
| Gloss DOI | PC | 63 76.6 | 61 75.2 |
| Gloss DOI | UR | 44.9 49.1 | 34.7 45.3 |
| Gloss DOI | Steel Control | 60.7 69.6 | -- -- |

## Example 2

A laminate including a carrier film, colour coat, and clear coat of sufficient thickness was thermo-formed to the shape of the desired part using standard thermo-forming techniques. The pre-form laminate thus obtained was placed in a mould with the paint layers against one of the mould surfaces. A part was formed by injection of material into the mould from the side opposite the painted surface. After the injected material solidified, the finished part was removed from the mould, ready for use. Minor trimming was necessary.

Parts can be made with this method using either the injection-moulding process or the reaction-injection-moulding process. The process requires a laminate which retains substantial gloss and uniform appearance after being stretched at least 20% in this method.

## Example 3

The laminate from Example 2 was placed in a mould, without pre-forming, and again material was injected into the mould against the film side of the laminate. As the material flowed into the mould, it forced the laminate against the front surface of the mould. After the injected material solidified, the finished part was removed from the mould, ready for use.

For parts of sufficient contour, such as fascia and bumper covers, the laminate will be stretched by at least 20%. Only those laminates having a sufficient thickness of clear coat resulted in parts which retained the high gloss of the laminate prior to the moulding operation. Again, parts could be made with this method using either the injection-moulding process or the reaction-injection-moulding process.

## Example 4

A 0.127 mm (5 mil) thick thermo-formable polyurethane film was coated with a black automotive base coat and clear coat paint. The film was subsequently placed across a surface of a mould used for reaction-injection-moulding urethane body side mouldings, and urethane substrate was injected behind the film in the usual manner. At a moulding temperature between 57° and 74°C (135° and 165°F), it was very difficult to lay the film flat in the mould. Careful positioning which is absolutely essential for multi-colour or patterned parts was almost impossible because of the high frictional drag between the paint and the mould

5

surface at these temperatures. Furthermore, when the part was removed from the mould it was observed to be flawed by the presence of large dimples and depressions, believed to be caused by air entrapped between the surfaces of the film and the mould.

Example 5

An identical thermo-formable polyurethane film as used in Example 4 was coated with an identical automotive base coat/clear coat system, except that 1% of a 15% toluene solution of PPG Industries L5310 surfactant was added to the clear coat formulation. When this film was subsequently placed across the surface of the body side mouldings mould at 57° to 74°C (135° to 165°F), the film laid flat and could be easily moved to an exact position for forming. The part was formed exactly as in Example 4 but when the part was removed from the mould, inspection of the part revealed no flaws to be present. The part surface exhibited precisely the extremely high degree of gloss and surface quality required for automotive applications.

The prior examples show the improved utility of utilizing a surfactant as a friction reducer to alleviate the problem of wrinkles, dimples and large scale surface bubbles as a result of air entrapment.

The invention has been described in an illustrative manner, and it is to be understood that the terminology which has been used is intended to be in the nature of words of description rather than of limitation.

**Claims**

1. A process of making a moulded part having a paint-covered surface formed from a laminate (10) including a film layer (12), a clear coat layer (14) and a paint layer (16) disposed therebetween having a predetermined gloss and hue; characterised in that the process comprises the steps of: providing said laminate (10); supporting the laminate (10) in a mould housing (18;18') having a material inlet with the film layer side (12) of the laminate (10) facing the inlet and the mould housing (18;18') having a predetermined internal surface shape (20;20'); moulding a substrate (22;22') against, and adhering the substrate (22;22') to, the film layer side (12) of the laminate (10) so as to produce said moulded part conforming to the predetermined shape of the mould (18;18') whilst retaining the predetermined gloss and hue of the laminate (10); and then removing from the mould (10) said moulded part having substantially said predetermined gloss and hue on the laminate side thereof.

2. A process according to claim 1, characterised in that said clear coat layer is about 0.0127 to 0.254 mm in thickness.

3. A process according to claim 2, characterised in that said paint layer is 0.0127 to 0.127 mm in thickness.

4. A process according to claim 1, in which the provided laminate (10) is substantially flat, characterised in that said moulding step includes injecting curable or molten thermoplastic polymeric material into the mould (18') against the film layer side (12) of the laminate (10), the injected material stretching the laminate (10) without substantially affecting the predetermined hue and gloss of the laminate (10).

5. A process according to claim 1, characterised in that the process includes the step of pre-moulding the laminate (10) to a predetermined stretched shape prior to supporting the laminate (10) in the mould (18).

6. A process according to claim 1, characterised in that said adhering step is further defined as chemically or mechanically joining the substrate (22;22') and film layer (12) directly together to form a bond therebetween.

7. A process according to claim 6, characterised in that the film layer side (12) of the laminate (10) is coated with an adhesion promoter prior to moulding the substrate (22;22') thereto.

8. A process according to claim 4, characterised in that the process includes preventing entrapment of air between the clear coat layer (14) and the mould (18') as the laminate (10) is stretched.

9. A process according to claim 8, characterised in that a surface-active agent is incorporated into the clear coat layer (14) prior to formation of the laminate (10) to prevent said entrapment of air.

*Fig.1.*

10

12

16

14

*Fig.2.*

18

10

20

## Fig.3.

## Fig.4.

## Fig.5.

*Fig.6.*

INSERT PROCESS

FORM-IN-PLACE PROCESS

PRODUCE LAMINATE SHEET OF FILM, PAINT LAYER, AND CLEARCOAT.

SUPPORT LAMINATE SHEET

MOULD SUBSTRATE TO LAMINATE SHEET WHILE FORMING LAMINATE TO MOULD

PRODUCE HEATED LAMINATE SHEET TO INTERNAL SHAPE OF MOULD

MOULD SUBSTRATE BEHIND FORMED LAMINATE

REMOVE FORMED PART HAVING LAMINATE AS OUTER SURFACE FROM MOULD

## DOCUMENTS CONSIDERED TO BE RELEVANT

EP 90306638.9

| Category | Citation of document with indication, where appropriate, of relevant passages | Relevant to claim | CLASSIFICATION OF THE APPLICATION (Int. Cl.5) |
|---|---|---|---|
| X | US - A - 4 459 092 (HATAKEYAMA) * Column 3, lines 1-35; column 5, lines 45-50 * | 1,4,6, 7 | B 29 C 51/14 |
| X | US - A - 4 369 157 (CONNER) * All claims * | 1,4,6, 7 | |
| X | US - A - 4 360 329 (HATAKEYAMA) * Fig. 3-5 * | 1,5-8 | |
| A | US - A - 4 307 058 (MORELLO et al.) * Totality * | 1 | |
| A | US - A - 4 849 145 (HIRSCH) * Column 12, lines 6-49; fig. 47 * | 1 | |
| D,A | US - A - 4 828 637 (MENTZER et al.) | | |
| D,A | US - A - 4 028 163 (FREY) | | |
| D,A | US - A - 4 268 570 (IMANAKA et al.) | | |
| D,A | US - A - 4 838 973 (MENTZER et al.) | | |
| D,A | US - A - 4 533 704 (ALEXANDER et al.) | | |

TECHNICAL FIELDS SEARCHED (Int. Cl.5)

B 29 C 39/00
B 29 C 41/00
B 29 C 43/00
B 29 C 45/00
B 29 C 47/00
B 29 C 49/00
B 29 C 51/00
B 29 C 63/00
B 29 C 69/00
B 32 B 15/00
B 32 B 31/00
C 08 L 75/00

The present search report has been drawn up for all claims

| Place of search | Date of completion of the search | Examiner |
|---|---|---|
| VIENNA | 28-12-1990 | TSCHÖLLITSCH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)